Europäisches Patentamt

European Patent Office

Office européen des brevets

(11) Publication number: **0 114 039**
**B1**

# (12) EUROPEAN PATENT SPECIFICATION

(45) Date of publication of patent specification: **11.03.87**

(21) Application number: **83850299.5**

(22) Date of filing: **08.11.83**

(51) Int. Cl.⁴: **G 01 N 9/14, G 01 N 33/28**

(54) A water detector.

(30) Priority: **12.01.83 SE 8300127**

(43) Date of publication of application:
**25.07.84 Bulletin 84/30**

(45) Publication of the grant of the patent:
**11.03.87 Bulletin 87/11**

(84) Designated Contracting States:
**DE FR GB IT NL**

(56) References cited:
**US-A-2 634 606
US-A-3 308 663
US-A-3 763 706
US-A-3 994 175**

(73) Proprietor: **Flygt AB
Box 1309
S-171 25 Solna (SE)**

(72) Inventor: **Landquist, Folke
Björnstigen 125
S-171 72 Solna (SE)**
Inventor: **Nyman, Lars-Erik
Bredavägen 60
S-180 10 Enebyberg (SE)**
Inventor: **Seger, Bengt
Fjärilsstigen 134
S-150 24 Rönninge (SE)**

(74) Representative: **Larsson, Sten
Flygt AB Box 1309
S-171 25 Solna (SE)**

Courier Press, Leamington Spa, England.

## Description

This invention concerns a device for indication of water in oil and more precisely a device for indicating when the amount of water leaked into the oil housing in a submersible pump reaches a certain value.

Submersible machines such as pumps and turbines, consist of one electric and one hydraulic unit connected by a rotatable shaft. In order to prevent the liquid in the hydraulic unit from coming into the electric unit, the machine is provided with an intermediate seal, often a mechanical seal. If the demands on tightness are high, the seal is often formed like a unit comprising two mechanical seals parted by an oil housing. The oil in said housing lubricates and cools the seals and also gives an indication of the condition of the seal adjacent the hydraulic unit.

If a liquid, here water, is pressed through said seal, the oil will be mixed with water and, depending on the oil quality, also be given another colour. A certain amount of water in the oil housing is not harmful, but more water in the oil may cause a damage on the seal heading the electrical unit. If water, or a mixture of water and oil leaks into the motor housing, the latter will be seriously damaged.

If the oil is checked regularly, it may thus indicate the condition of the seal, but such a check can obviously not be carried out so often that the risks for a break-down are eliminated. Therefore, it has been a wish for a long time to arrange a sensor in the oil housing, which shall give a signal to an alarm device as soon as the amount in-leaked water has reached a certain value. The problem is complicated by the fact that different types of oil are used. If the oil is of an emulsifying type, the water and the oil are mixed, while, if another type of oil is used, the water will stay at the bottom of the oil housing and not mix with the oil. The sensor must thus be able to indicate an increasing amount of clear water as well as a mixture of the two media.

Devices which have been used up to now often works according to the principle that the electric line resistance in the oil is changed by the water. The "ABS Sicherheits-System zur Uberwachung der Dichtungseinheiten" is an example of a device working along these lines.

It shows however, that these devices are too sensitive to be used in this type of machines which often are roughly handled. Films on the electrodes cause changed conditions which may give false alarms.

According to the invention the problem to indicate the presence of water in the oil housing of a submersible machine is solved by help of the device stated in the attached claim.

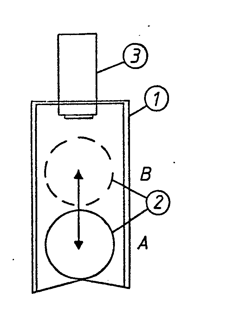

The invention is described more closely below with reference to the enclosed drawing. Here 1 stands for a cage containing a float 2, while 3 stands for a contact free sensor.

The cage 1 is arranged at a suitable depth in the oil housing so, that it takes a vertical or inclined position. When the cage is surrounded by clean oil, the float takes the position A, which means that its density is so chosen that it does not float in clean oil. The sensor is not influenced by the float in position A.

If the float is surrounded by a water/oil mixture where the amount of water exceeds a predetermined value, the float will ascend and take the position B. In this position it influences the sensor 3 which can be so connected that an alarm signal is generated. This is of course also true if the float is surrounded by clean water. The device is thus possible to use for emulsifying as well as for non emulsifying oil.

The contact free sensor 3 has the advantage that possible films on its surface or the surface of the float do not have any influence on the function. Further, the play between the float and the surrounding cage is so big that any pollutions will not risk the reliability.

The sensor may be designed in many different ways. Thus it may be influenced optically, capacitively or inductively within the frame of the invention.

## Claim

A device for indication of water in the oil housing in a submersible machine, for instance a pump or a turbine, characterized in, that it comprises a float (2) freely movable in a cage (1) or the like, meant to be placed in the oil housing, the cage (1) having at its upper end a sensor (3) sensing the presence of the float (2) and arranged to generate an alarm signal when the float contacts the sensor, comes within a certain distance from the sensor or passes signals to or receives signals from the sensor.

## Patentanspruch

Vorrichtung zur Anzeige von Wasser im Ölbehälter einer unter Wasser absenkbaren Arbeitsmaschine, z.B. einer Pumpe oder einer Turbine, dadurch gekennzeichnet, daß sie einen in einem zur Einbringung in das Ölgehäuse vorgesehenen Käfig (1) oder dergleichen frei beweglichen Schwimmer (2) enthält, wobei der Käfig (1) an seinem oberen Ende einen Sensor (3) aufweist, der das Vorhandensein des Schwimmers (2) feststellt und ein Alarmsignal erzeugt, wenn der Schwimmer mit dem Sensor in Berührung kömmt, einen bestimmten Abstand von dem Sensor unterschreitet oder Signale an den Sensor abgibt oder von diesem empfängt.

## Revendication

Dispositif pour l'indication de la présence d'eau dans un carter d'huile d'une machine immergeable, par exemple une pompte ou une turbine, caractérisé en ce qu'il comprend un flotteur (2) se déplaçant librement dans une cage (1) ou similaire, prévue pour être placée dans le carter d'huile, la cage (1) ayant, à son extrémité supérieure, un capteur (3) détectant la présence du flotteur (2) et arrangé pour engendrer un signal d'alarme lorsque le flotteur touche le capteur, vient à une certaine distance du capteur ou encore transmet à ou reçoit des signaux de ce capteur.